# EUROPÄISCHE PATENTANMELDUNG

(11) **EP 1 512 916 A2**
(43) Veröffentlichungstag der Anmeldung: **09.03.2005**
(21) Anmeldenummer: 04016903.9
(22) Anmeldetag: 17.07.2004
(51) Int. Cl.: F24D 19/08

(54) **Entlüfterkopf für Heizkörper**

(30) Priorität: 03.09.2003 DE 10341058
(71) Anmelder: Vasco BVBA, 3650 Dilsen (BE)
(72) Erfinder: Aerts, Frederik, 3580 Beringen (BE)
(74) Vertreter: Schrooten, Rolf, Dipl.-Ing.

(57) **Zusammenfassung**

Die Erfindung betrifft einen Entlüfterkopf (1) mit einem Entlüftungskanal (4) zum Entlüften von Heizkörpern (2), der in eine Öffnung eines Heizkörpers (2), insbesondere in eine am Heizkörper (2) angeordnete Buchse, einsetzbar, vorzugsweise einschraubbar ist, wobei der Entlüfterkopf (1) an seiner Außenstirnseite (5) einen radial nach außen überstehenden Kragen (8) aufweist, durch den der Randbereich der Öffnung des Heizkörpers (2) abdeckbar ist, wobei der Entlüfterkopf (1) eine von seiner Außenstirnseite her zugängliche erste Ausnehmung (9) mit einem zum Zusammenwirken mit einem Einsetzwerkzeug geeigneten mehreckigen Innenprofil (10) aufweist, und wobei der Entlüfterkopf (1) eine axiale Bohrung (7) aufweist, in der ein verstellbarer Ventilkörper (11) eingesetzt ist, durch den der Entlüftungskanal (4) verschlossen oder geöffnet werden kann, wobei der Entlüfterkopf (1) an der Außenstirnseite (5) eine zur ersten Ausnehmung (9) konzentrische zweite Ausnehmung (15) aufweist, an deren Boden (16) sich die erste Ausnehmung (9) anschließt, wobei die zweite Ausnehmung (15) eine kreisrunde Form mit einem Durchmesser (D2) hat, der gleichgroß oder größer ist als die größte Querdistanz (D1) der ersten Ausnehmung (9), und wobei der Ventilkörper (11) eine senkrecht zu seiner Rotationsachse (6) ausgerichtete Scheibe (17) umfasst, die kreisrund ausgebildet ist und die zumindest in der Verschlussposition des Ventilkörpers (11) in der zweiten Ausnehmung (15) einliegt. Der Entlüfterkopf (1) liefert ein optimiertes optisches Erscheinungsbild und ist daher insbesondere bei Design-Heizkörpern vorteilhaft einsetzbar.

## Beschreibung

Die vorliegende Erfindung betrifft einen Entlüfterkopf mit einem Entlüftungskanal zum Entlüften von Heizkörpern, der in eine Öffnung eines Heizkörpers, insbesondere in eine am Heizkörper angeordnete Buchse, einsetzbar, vorzugsweise einschraubbar ist, wobei der Entlüfterkopf an seiner Außenstirnseite einen radial nach außen überstehenden Kragen aufweist, durch den der Rand der Öffnung des Heizkörpers abdeckbar ist, wobei der Entlüfterkopf eine von seiner Außenstirnseite her zugängliche erste Ausnehmung mit einem zum formschlüssigen Zusammenwirken mit einem Einsetzwerkzeug geeigneten mehreckigen Innenprofil aufweist, und wobei der Entlüfterkopf eine axiale Bohrung, insbesondere eine zentrale Durchgangsbohrung aufweist, in der ein insbesondere durch Verdrehung in einem Gewinde verstellbarer Ventilkörper eingesetzt ist, durch den der Entlüftungskanal in einer Verschlussposition des Ventilkörpers verschlossen oder in einer Entlüftungsposition des Ventilkörpers geöffnet werden kann.

Derartige Entlüfterköpfe sind allgemein bekannt. Sie werden zur Entlüftung von Heizkörpern eingesetzt, um überschüssige Luft aus der Heizungsanlage ablassen zu können. Ansammlungen von Luft können Strömungen behindern oder unterbrechen und bei wärmetechnischen Geräten Heizflächen ganz oder teilweise ausschalten. Luft verursacht außer Störungen im Wasserkreislauf aber auch Korrosion und Geräusche. Um die Luft aus Heizkörpern entfernen zu können besitzen die Entlüfterköpfe Ventilkörper, die üblicherweise manuell betätigt werden können.

Beim Einsetzen der Entlüfterköpfe in die Öffnungen oder Buchsen von Heizkörpern stehen die bekannten Entlüfterköpfe mit einem vergleichsweise dicken und großen Flansch axial über die äußere Randfläche der Buchsen hervor, was nicht nur einen zusätzlichem Platzbedarf bedingt, sondern auch optisch unschön aussieht und somit insbesondere bei Design-Heizkörpern von Nachteil ist.

Oftmals ist der relativ dicke Flansch durch ein Außenprofil bedingt, welches zum Zusammenwirken mit einem Einsetzwerkzeug geeignet sein muss. Um diese Notwendigkeit zu beseitigen ist es auch bekannt, die Entlüfterköpfe mit einem nach außen offenen Werkzeughohlprofil, insbesondere mit einem Innensechskant zu versehen. Eine derartige Ausbildung ist jedoch mit dem Nachteil behaftet, dass dieses Werkzeughohlprofil von außen sichtbar ist, und dass darin noch der üblicherweise durch Verdrehung verstellbare Ventilköper angeordnet ist, was zu einer insgesamt sehr unruhigen und daher für Design-Heizkörper ungeeigneten Bauform führt.

Aus der DE-A-198 17 106 ist des weiteren ein Entlüfterkopf bekannt, der ein nach außen offenes Innensechskantprofil aufweist, über das er vollständig in die Buchse eines Heizkörpers versenkbar ist und somit nicht mehr über die äußere Stirnfläche der Buchse hervorragt. Hierbei ergeben sich jedoch im eingesetzten Zustand Nahtfugen an der äußeren Umrandung der Stirnseite des Entlüftungskopfes, die das optische Erscheinungsbild ebenso stören, wie der in dem Innensechskant sichtbare Ventilkörper. Deshalb wird hier eine Abdeckkappe vorgeschlagen, die zur Abdeckung der Nahtfugen und des Innensechskantprofils und des Ventilkörpers an der äußeren Stirnseite des Entlüfterkopfes befestigt werden kann.

Eine derartige Abdeckkappe ist jedoch mit dem Nachteil verbunden, dass ein zusätzliches separates Bauteil benötigt wird, was den Montageaufwand und die Herstellungskosten erhöht. Außerdem steht die Kappe axial nach vorne vor, was insbesondere auch aufgrund der Farbunterschiede zwischen der üblicherweise aus Kunststoff bestehenden Abdeckkappe und dem aus lackiertem Metall bestehenden Heizkörper die optische Erscheinung beeinträchtigt. Für moderne Design-Heizkörper kommt diese Lösung daher nicht in Betracht.

Aufgabe der vorliegenden Erfindung ist es daher, einen preiswert herzustellenden und leicht montierbaren Entlüfterkopf der eingangs genannten Art zu schaffen, der auf konstruktiv einfache Weise einen nur geringen axialen Überstand über den Heizkörper hat und der bei leichter Bedienbarkeit gleichzeitig auch das optische Erscheinungsbild verbessert.

Diese Aufgabe wird erfindungsgemäß durch einen Entlüfterkopf nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der Entlüfterkopf an der Außenstirnseite eine zur ersten Ausnehmung konzentrische zweite Ausnehmung aufweist, an deren Boden sich die erste Ausnehmung anschließt, wobei die zweite Ausnehmung eine kreisrunde Form mit einem Durchmesser hat, der gleichgroß ist wie die größte Querdistanz der ersten Ausnehmung oder der größer ist als die größte Querdistanz der ersten Ausnehmung, und dass der Ventilkörper eine senkrecht zu seiner Rotationsachse ausgerichtete Scheibe umfasst, die kreisrund ausgebildet ist und die zumindest in der Verschlussposition des Ventilkörpers in der zweiten Ausnehmung einliegt. Unter Querdistanz ist hierbei die Abmessung in einer senkrecht zur Längsachse des Entlüfterkopfes liegenden Ebene zu verstehen.

Der Hauptvorteil liegt dabei darin, dass eine ebene und geschlossene Oberfläche des Entlüfterkopfes und somit ein optisch sehr ansprechendes Erscheinungsbild erzielbar ist. Deshalb kann der erfindungsgemäße Entlüfterkopf besonders gut an modernen Design-Heizkörpern eingesetzt werden. Außerdem steht der Entlüfterkopf axial mit seinem Kragen nur sehr gering vor, wodurch nicht nur weniger Einbauraum benötigt wird, was bei beengten Einbauverhältnissen gegebenenfalls auch zu einer einfacheren Montierbarkeit des Entlüfterkopfes führen kann, sondern wodurch vor allem auch das Design des Heizkörpers wesentlich weniger gestört wird als bei bisherigen Entlüfterköpfen.

Auf konstruktiv einfache Weise wird somit ein optisch ansprechender Entlüfterkopf geschaffen, der kostengünstig herzustellen und sowohl leicht zu montieren als auch leicht zu bedienen ist.

Besonders vorteilhaft ist es dabei, wenn die Scheibe am äußeren axialen Ende des Ventilkörpers angeordnet ist. Auf diese Weise bildet die Scheibe den axialen Abschluss des Ventilkörpers.

Eine besonders kleinbauende und optisch ansprechende Ausführung des Entlüfterkopfes kann dadurch erreicht werden, dass die Scheibe in einer Dicke ausgeführt ist, die gleichgroß ist wie die axiale Tiefe der zweiten Ausnehmung oder die kleiner ist als die axiale Tiefe der zweiten Ausnehmung. Vorteilhafterweise entspricht die Dicke der Scheibe zumindest im wesentlichen der axialen Tiefe der zweiten Ausnehmung.

Besonders vorteilhaft ist es ferner, wenn die Scheibe einen Durchmesser hat, der mit leichtem Spiel in die zweite Ausnehmung einsetzbar ist. Hierdurch kann bei einem kaum sichtbaren Spalt am Umfang der Scheibe eine leichte Bedienbarkeit erreicht werden.

Damit die Scheibe in der Verschlussposition des Ventilkörpers auch den axialen Abschluss des Entlüfterkopfes bilden kann wird weiterhin vorgeschlagen, dass die Außenfläche der Scheibe in der Verschlussposition des Ventilkörpers sich zumindest annähernd in der Ebene der Außenfläche des die zweite Ausnehmung umgebenden Randbereiches des Entlüfterkopfes befindet.

Gemäß einer besonders bevorzugten Ausführungsform der Erfindung ist hierbei vorgesehen, dass der Kragen des Entlüfterkopfes in der Form einer flachen Lochscheibe ausgebildet ist, und dass die Außenfläche der Scheibe in der Verschlussposition des Ventilkörpers sich zumindest annähernd in der Ebene der Außenfläche des Kragens befindet. Der Kragen kann aufgrund des innenseitig in dem Entlüfterkopf vorgesehenen Profils für ein Montage-Einsetzwerkzeug besonders dünn ausgeführt werden, wodurch das optische Erscheinungsbild weiter verbessert wird.

Für eine einfache Bedienbarkeit ist es ferner besonders vorteilhaft, wenn die Außenfläche der Scheibe mindestens eine Ausnehmung aufweist, die ein zum formschlüssigen Zusammenwirken mit einem Verstellwerkzeug geeignetes Profil hat.

Nach einer bevorzugten Ausführungsform der Erfindung ist dabei vorgesehen, dass die Außenfläche der Scheibe einen oder mehrere, vorzugsweise zwei, in einem Winkel zueinander angeordnete Schlitz(e) oder Nut(en) aufweist. Die Nuten können sich dabei entweder über den gesamten Durchmesser oder nur über einen Teil des Durchmessers der Scheibe erstrecken. Bei der Anordnung von mehreren Nuten werden vorzugsweise zwei Nuten in zueinander senkrechter Ausrichtung angeordnet.

Eine besonders einfache und somit kostengünstige Konstruktion kann dadurch erzielt werden, dass die axiale Bohrung des Entlüfterkopfes als Durchgangsbohrung ausgeführt ist, die zumindest einen Teilbereich des Entlüftungskanals bildet. In diese Durchgangsbohrung kann dabei auch ein von der Außenseite des Kragen ausgehender und schräg verlaufender Entlüftungskanal einmünden. Gemäß einer alternativen Ausführungsform kann der Entlüftungskanal auch vollständig von der Durchgangsbohrung gebildet werden.

Für bestimmte Anwendungsfälle kann es insbesondere auch aus fertigungstechnischen Gründen besonders vorteilhaft sein, die axiale Bohrung als stimseitig geschlossene Sacklochbohrung auszuführen, in die mindestens ein weiterer Kanal mündet, der mit der Sacklochbohrung den Entlüftungskanal bildet. Dieser in die Sacklochbohrung einmündende Kanal wird vorzugsweise durch eine radial verlaufende Bohrung gebildet, die so zusammen mit der Sacklochbohrung eine verschließbare Verbindung von einem radial außen liegenden Bereich der Mantelfläche des Entlüfterkopfes zur Außenstirnseite des Entlüfterkopfes schafft.

Besonders vorteilhaft ist es ferner, wenn der Ventilkörper einen Schaft mit einem Außengewinde zum Einschrauben in ein Innengewinde der axialen Bohrung aufweist, wobei zumindest in einem Teilbereich des Außengewindes eine oder mehrere sich vorzugsweise axial erstreckende Nuten vorgesehen sind, die so tief ausgebildet sind, dass ihr Boden einen radialen Abstand zum Kerndurchmesser bzw. zu den inneren Flankenspitzen des Innengewindes der axialen Bohrung hat. Durch diese Nuten wird eine Verbindung im Bereich des Gewindes geschaffen, durch die ein Ablassen der Luft auch dann schon möglicht ist, wenn der Ventilkörper nicht vollständig aus dem Gewinde herausgedreht ist, so dass sich die Handhabbarkeit bei der Bedienung des Entlüfterkopfes verbessert.

Die vorliegende Erfindung betrifft außerdem auch Heizkörper, insbesondere Design-Heizkörper, die mit mindestens einem Entlüfterkopf der vorangehend beschriebenen Art versehen sind.

Dabei ist es weiterhin besonders vorteilhaft, wenn der Heizkörper auch mindestens einen Abschlusskopf aufweist, der unmittelbar oder über eine Buchse in eine weitere Öffnung des Heizkörpers abdichtend eingesetzt ist, wobei der Abschlusskopf an seiner Außenstirnseite ebenfalls einen radial nach außen überstehenden Kragen aufweist, durch den der Randbereich der weiteren Öffnung des Heizkörpers abgedeckt ist. Abschlussköpfe können so zum wasserdichten Verschließen von in Heizkörpern vorhandenen Öffnungen eingesetzt werden. Gerade bei Design-Heizkörpern ist es dabei aus optischen Gründen von Vorteil, wenn der von außen sichtbare Kragen des Abschlusskopfes zumindest im wesentlichen die gleiche Größe und/oder die gleiche Oberflächenstruktur aufweist wie der Kragen des Entlüfterkopfes. So kann der Abschlusskopf an seiner Außenseite vorteilhafterweise genauso wie der Entlüfterkopf ausgebildet sein und somit auf die gleiche Art und Weise in eine Öffnung bzw. in eine Buchse eingesetzt oder eingeschraubt werden. Insbesondere kann an der äußeren Stirnseite des Abschlusskopfes eine der Ausnehmung der Scheibe des Ventilkörpers entsprechende Ausnehmung eingeformt sein, über die der Abschlusskopf problemlos in die Öffnung oder Buchse eingeschraubt oder aus ihr herausgeschraubt werden kann. Zusätzliche Abdeckkappen zur Abdeckung der Öffnungen oder Buchsen nach außen hin sind dabei weder beim Entlüfterkopf noch beim Abschlusskopf erforderlich.

Weitere Vorteile und Merkmale der Erfindung ergeben sich aus der nachfolgenden Beschreibung und den in den Zeichnungen dargestellten Ausführungsbeispielen. Darin zeigen:
- Figur 1:: Seitenansicht einer ersten Ausführungsvariante eines erfindungsgemäßen Entlüfterkopfes,
- Figur 2:: Aufsicht des Entlüfterkopfes aus Figur 1,
- Figur 3:: Querschnitt durch den Entlüfterkopf aus Figur 2 entlang der Schnittlinie A-A,
- Figur 4:: Querschnitt durch den Entlüfterkopf aus Figur 2 entlang der Schnittlinie B-B,
- Figur 5:: Querschnitt B-B durch den Entlüfterkopf aus Figur 2 mit herausgenommenen Ventilkörper,
- Figur 6:: Querschnitt B-B durch den aus dem Entlüfterkopf aus Figur 2 herausgenommenen Ventilkörper,
- Figur 7:: Dreidimensionale Ansicht des Entlüfterkopfes aus Figur 1 in verschlossenem Zustand,
- Figur 8:: Dreidimensionale Ansicht des Entlüfterkopfes aus Figur 1 in geöffnetem Zustand mit herausgenommenen Ventilkörper,
- Figur 9:: zweite Ausführungsvariante eines erfindungsgemäßen Entlüfterkopfes,
- Figur 10:: dritte Ausführungsvariante eines erfindungsgemäßen Entlüfterkopfes,
- Figur 11:: Dreidimensionale Ansicht des in einen nur teilweise dargestellten Heizkörper eingebauten Entlüfterkopfes aus Figur 1,
- Figur 12:: Querschnitt durch eine vierte Ausführungsvariante eines erfindungsgemäßen Entlüfterkopfes,
- Figur 13:: Querschnitt durch eine fünfte Ausführungsvariante eines erfindungsgemäßen Entlüfterkopfes,
- Figur 14:: dreidimensionale Ansicht des aus dem Entlüfterkopf aus Figur 12 oder Figur 13 herausgenommenen Ventilkörpers,
- Figur 15:: Seitenansicht eines Abschlusskopfes,
- Figur 16:: dreidimensionale Ansicht des Abschlusskopfes aus Figur 15.

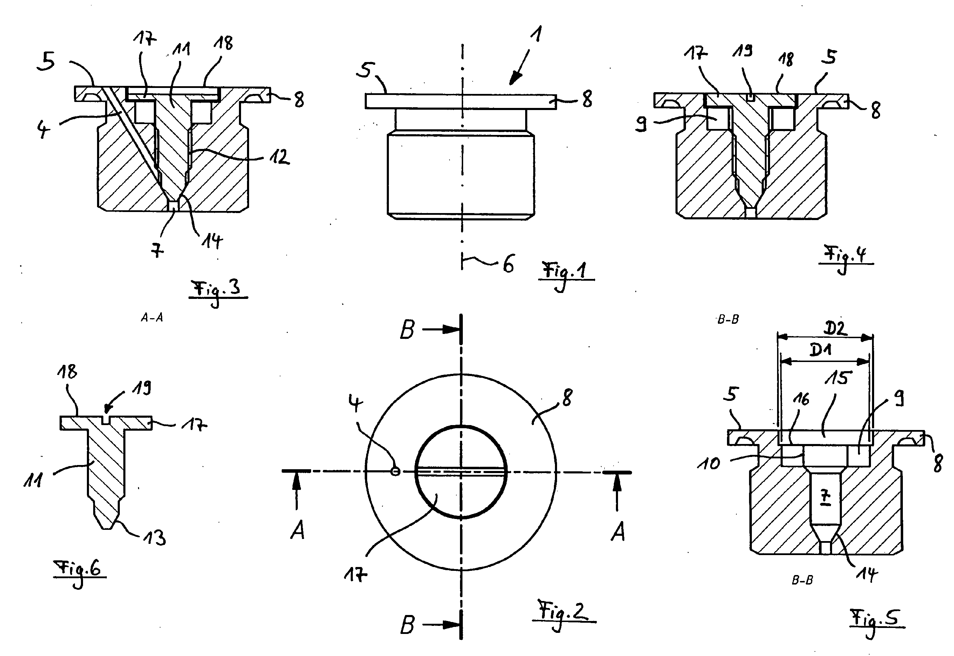

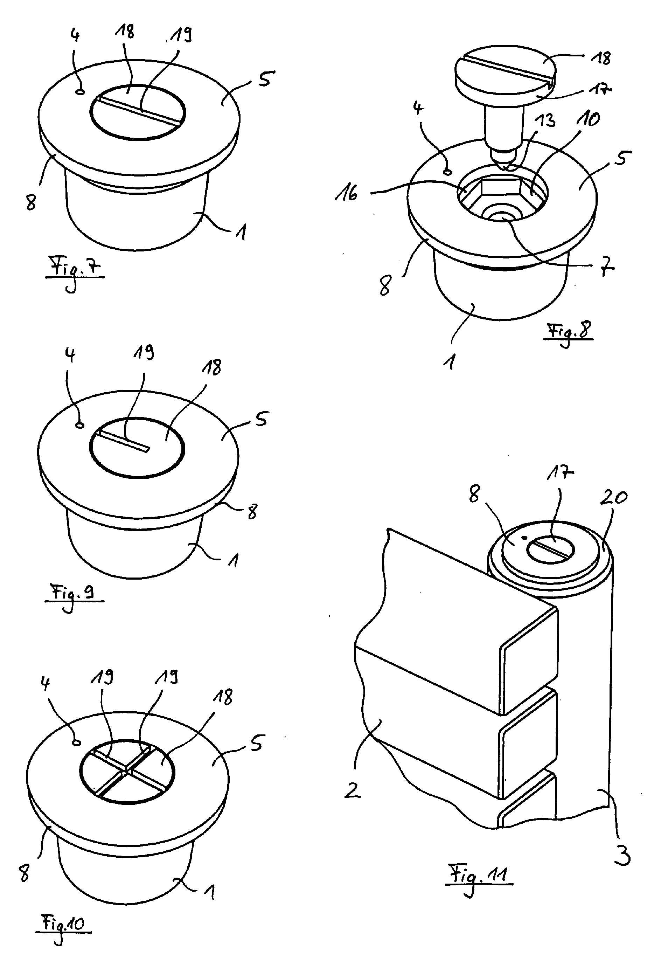

Die in den Figuren dargestellten Entlüfterköpfe 1 werden in Design-Heizkörper 2, insbesondere in ein Verteilerrohr 3 eines Design-Heizkörpers 2 eingesetzt, um gegebenenfalls im Heizkörper 2 vorhandene überschüssige Luft ablassen und den Heizkörper 2 auf diese Weise entlüften zu können. Hierzu hat der in den Figuren 1 bis 5 dargestellte Entlüfterkopf 1 einen Entlüftungskanal 4, der ausgehend von der Außenstirnseite 5 des Entlüfterkopfes 1 schräg zu seiner Längsachse 6 verläuft und in den in den Figuren 3 und 4 unten dargestellten und im eingebauten Zustand innerhalb des Heizkörpers 2 liegenden Endbereich einer zentralen Durchgangsbohrung 7 mündet. Aus dem Heizkörper abzulassende Luft kann dabei durch den innenliegenden Endbereich der axialen Bohrung 7 sowie daran anschließend durch den Entlüftungskanal 4 hindurch vom Inneren des Heizkörpers nach außen gelangen.

Der Entlüfterkopf 1 hat an seiner Außenstirnseite 5 einen radial nach außen überstehenden und über seinen Umfang vollständig umlaufenden Kragen 8, der im eingebauten Zustand den der Rand der Öffnung des Heizkörpers 2 abdeckt. Der Kragen ist in einer senkrecht zur Längsachse 6 verlaufenden Ebene mit einer äußerst geringen Dicke sehr flach ausgebildet, da er keine Angriffsfläche für ein Einsetzwerkzeug aufweist. Das Einsetzen des Entlüfterkopfes 1 in den Heizkörper 2 erfolgt durch Einschrauben in eine Gewindeöffnung des Heizkörpers 2, wobei der Entlüfterkopf 1 in seien Inneren eine von seiner Außenstirnseite 5 her zugängliche erste Ausnehmung 9 mit einem zum formschlüssigen Zusammenwirken mit einem Einsetzwerkzeug geeigneten sechseckigen Innenprofil 10 aufweist. Durch dieses nach außen offene Innensechskantprofil 10 kann der Entlüfterkopf 1 leicht montiert und auch leicht wieder demontiert werden.

Zum Öffnen und Verschließen hat der Entlüfterkopf 1 einen Ventilkörper 11, der in einem mit einem Gewinde 12 versehenen Bereich der Durchgangsbohrung 7 eingesetzt ist und somit durch Verdrehen axial verstellt werden kann. In der insbesondere in den Figuren 3 und 4 dargestellten Verschlussposition liegt der kegelstumpfförmige Endbereich 13 in einem hierzu komplementären kegelstumpfförmigen Bereich 14 der Durchgangsbohrung 7 an und verschließt dadurch die Durchgangsbohrung 7 und den Entlüftungskanal 4. In dieser Position kann weder Wasser noch Luft aus dem Heizkörper austreten. Durch ein leichtes Herausdrehen des Ventilkörpers 11 wird eine Verbindung zwischen der Durchgangsbohrung 7 und dem Entlüftungskanal 4 geschaffen und die Luft kann hierdurch aus dem Heizkörper 2 entweichen.

Erfindungsgemäß weist der Entlüfterkopf 1 an seiner Außenstirnseite 5 eine zur ersten Ausnehmung konzentrische zweite Ausnehmung 15 auf, an deren Boden 16 sich die erste Ausnehmung 9 anschließt. Die zweite Ausnehmung 15 hat einen kreisrunden Querschnitt und ihr Durchmesser D2 ist größer als die größte Querdistanz D1 der ersten Ausnehmung 9. In dieser zweiten Ausnehmung 15 liegt eine kreisrunde Scheibe 17 ein, die axial außen an den Ventilkörper 11 angeformt ist. Die Scheibe 17 ist senkrecht zu der Rotationsachse des Ventilkörpers 11 bzw. zur Längsachse 6 des Entlüfterkopfes 1 ausgerichtet und bildet seinen außenliegenden axialen Abschluss. In der Verschlussposition des Ventilkörpers 11 befindet sich die Außenfläche 18 der Scheibe 17 bündig und in einer Ebene mit der Außenstirnseite 5 des Kragens 8.

Die Scheibe 17 hat eine Dicke, die geringfügig kleiner ist als die axiale Tiefe der zweiten Ausnehmung 15. Der Durchmesser der Scheibe 17 ist geringfügig kleiner als der Durchmesser D2 der zweiten Ausnehmung 15, so dass die Scheibe 17 mit einem leichten Spiel in die zweite Ausnehmung 15 eingesetzt werden kann.

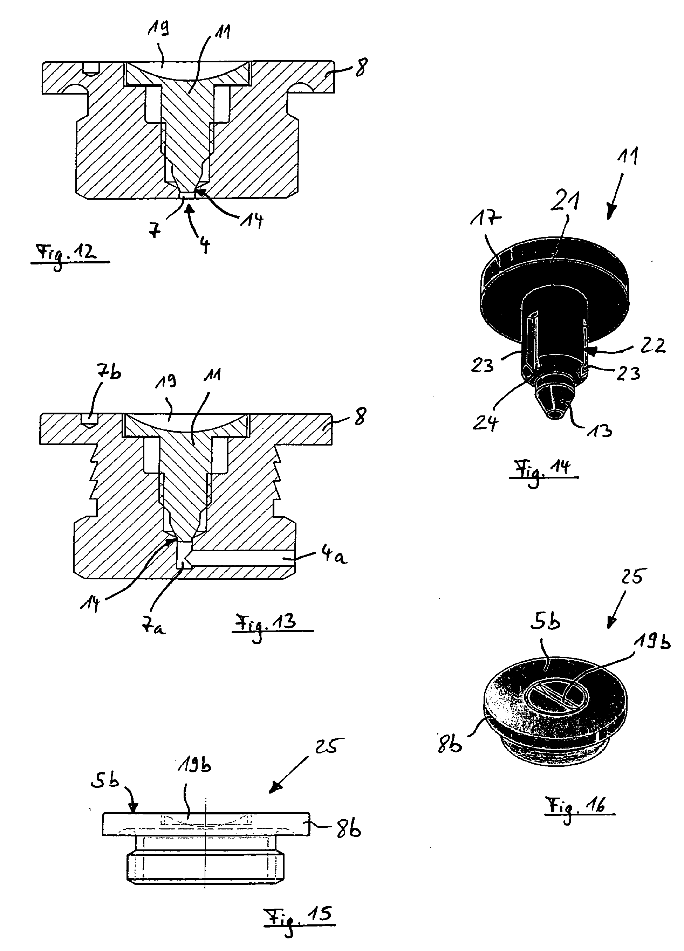

Die Außenfläche 18 der Scheibe 17 weist bei den in den Figuren 1 bis 8 dargestellten Ausführungsformen jeweils eine nutförmige Ausnehmung 19 auf, die für ein formschlüssiges Zusammenwirken mit einem Verstellwerkzeug geeignet ist. Diese Ausnehmung 19 erstreckt sich geradlinig über den gesamten Durchmesser der Scheibe 17. Bei der in Figur 9 dargestellten Ausführungsvariante erstreckt sich die Ausnehmung 19 demgegenüber nur über einen Teilbereich des Durchmessers der Scheibe 17 und bei der in Figur 10 dargestellten Ausführungsvariante sind zwei sich jeweils über den gesamten Durchmesser der Scheibe 17 erstreckende Ausnehmungen 19 vorgesehen, die in einem rechten Winkel zueinander verlaufen.

Wie in Figur 11 besonders gut zu erkennen ist, erheben sich der Kragen 8 und die darin bündig einliegende Scheibe 17 des Ventilkörpers 11 nur um einen sehr geringen Betrag über die stirnseitige Abschlussfläche 20 des Verteilerrohrs 3 eines Heizkörpers 2, so dass ein optisch ansprechender Entlüfterkopf 1 geschaffen wird, der insbesondere für Design-Heizkörper 2 in hervorragender Weise geeignet ist.

Bei den in den Figuren 12 und 13 dargestellten Ausführungsvarianten von Entlüfterköpfen 1 ist kein schräg verlaufender Entlüftungskanal vorgesehen. In Figur 12 ist statt dessen die axiale Bohrung 7 als Durchgangsbohrung ausgeführt, die so gleichzeitig auch den Entlüftungskanal 4 bildet. In Figur 13 ist die axiale Bohrung als endseitig geschlossene Sacklochbohrung 7a ausgeführt. In das innere Ende der Sacklochbohrung 7 mündet ein radial verlaufender Kanal 4a ein, der auf diese Weise zusammen mit der Sacklochbohrung 7a den Entlüftungskanal bildet. Dabei kann in der Außenstirnseite 5 vorteilhafterweise eine kleine Markierung, insbesondere eine Markierungsbohrung 7b vorgesehen sein, die beispielsweise um 180° versetzt dem Kanal 4a gegenüberliegt und so dessen radiale Position anzeigt.

In beiden Fällen wird durch leichtes Herausdrehen des Ventilkörpers 11 der kegelstumpfförmige Endbereich 13 des Ventilkörpers 11 aus dem komplementären kegelstumpfförmigen Bereich 14 der Durchgangsbohrung 7 bzw. der Sacklochbohrung 7a abgehoben und eine Verbindung geschaffen, so dass Luft durch die Durchgangsbohrung 7 hindurch bzw. zunächst durch den Kanal 4a und danach durch die Sacklochbohrung 7a hindurch aus dem Innenraum des Heizkörpers 2 nach außen entweichen kann.

Dazu weist der in Figur 14 dargestellte aus dem Entlüfterkopf gemäß Figur 12 oder Figur 13 herausgenommene Ventilkörper 11 einen Schaft 21 mit einem Außengewinde 22 zum Einschrauben in das Innengewinde 12 der axialen Bohrung 7 bzw. 7a auf. Über den Bereich des Außengewindes 22 erstrecken sich drei jeweils um 120° zueinander versetzte axial verlaufende Nuten 23. Der Boden 24 der Nuten 23 ist dabei so weit nach innen in den Schaft 21 hinein eingebracht, dass jeweils ein radialer Abstand zu den inneren Flankenspitzen des Innengewindes 12 der axialen Bohrung 7 gegeben ist, der jeweils eine für Luft durchgängige Verbindung auch im Bereich des Gewindes 12 schafft.

In den Figuren 15 und 16 ist ein Abschlusskopf 25 dargestellt, der ebenso wie der Entlüfterkopf 1 in eine Öffnung eines Heizkörpers 2 einsetzbar ist. Der Abschlusskopf 25 hat keinen Entlüftungskanal und keine axiale Bohrung, da er lediglich zum wasserdichten Verschließen von in Heizkörpern 2 vorhandenen Öffnungen dient. Um ein optisch möglichst einheitliches Erscheinungsbild zu erreichen weist auch der Abschlusskopf 25 an seiner Außenstirnseite 5b einen radial nach außen überstehenden Kragen 8b auf und in die Außenstimseite 5b ist ebenfalls eine schlitzförmige Vertiefung 19b eingebracht. Sowohl der Kragen 8b als auch die Vertiefung 19b sowie die die Vertiefung 19b kreisförmig umgebende Ringnut 26 haben die gleichen Abmessungen und die gleichen Oberflächenstrukturen wie der Entlüfterkopf 1. Der eingesetzte Abschlusskopf 25 sieht daher im eingesetzten Zustand genauso aus, wie es in Figur 11 für den Entlüfterkopf 1 dargestellt ist.

## Patentansprüche

1. Entlüfterkopf (1) mit einem Entlüftungskanal (4) zum Entlüften von Heizkörpern (2), der in eine Öffnung eines Heizkörpers (2), insbesondere in eine am Heizkörper (2) angeordnete Buchse, einsetzbar, vorzugsweise einschraubbar ist,
wobei der Entlüfterkopf (1) an seiner Außenstirnseite (5) einen radial nach außen überstehenden Kragen (8) aufweist, durch den der Randbereich der Öffnung des Heizkörpers (2) oder der Buchse abdeckbar ist,
wobei der Entlüfterkopf (1) eine von seiner Außenstirnseite her zugängliche erste Ausnehmung (9) mit einem zum Zusammenwirken mit einem Einsetzwerkzeug geeigneten mehreckigen Innenprofil (10) aufweist,
und wobei der Entlüfterkopf (1) eine axiale Bohrung (7) aufweist, in der ein verstellbarer Ventilkörper (11) eingesetzt ist, durch den der Entlüftungskanal (4) verschlossen oder geöffnet werden kann,
**dadurch gekennzeichnet,**
**dass** der Entlüfterkopf (1) an der Außenstirnseite (5) eine zur ersten Ausnehmung (9) konzentrische zweite Ausnehmung (15) aufweist, an deren Boden (16) sich die erste Ausnehmung (9) anschließt,
wobei die zweite Ausnehmung (15) eine kreisrunde Form mit einem Durchmesser (D2) hat, der gleichgroß oder größer ist als die größte Querdistanz (D1) der ersten Ausnehmung (9),
und **dass** der Ventilkörper (11) eine senkrecht zu seiner Rotationsachse (6) ausgerichtete Scheibe (17) umfasst, die kreisrund ausgebildet ist und die zumindest in der Verschlussposition des Ventilkörpers (11) in der zweiten Ausnehmung (15) einliegt.

2. Entlüfterkopf nach Anspruch 1, **dadurch gekennzeichnet, dass** die Scheibe (17) am äußeren axialen Ende des Ventilkörpers (11) angeordnet ist.

3. Entlüfterkopf nach Anspruch 1 oder 2, **dadurch gekennzeichnet, dass** die Scheibe (17) eine Dicke hat, die gleichgroß oder kleiner ist als die axiale Tiefe der zweiten Ausnehmung (15).

4. Entlüfterkopf nach einem der vorherigen Ansprüche, **dadurch gekennzeichnet, dass** die Scheibe (17) einen Durchmesser hat, der mit leichtem Spiel in die zweite Ausnehmung (15) einsetzbar ist.

5. Entlüfterkopf nach einem der vorherigen Ansprüche, **dadurch gekennzeichnet, dass** die Außenfläche (18) der Scheibe (17) in der Verschlussposition des Ventilkörpers (11) sich zumindest annähernd in der Ebene der Außenfläche (5) des die zweite Ausnehmung (15) umgebenden Randbereiches des Entlüfterkopfes (1) befindet.

6. Entlüfterkopf nach Anspruch 5, **dadurch gekennzeichnet, dass** der Kragen (8) des Entlüfterkopfes (1) in der Form einer flachen Lochscheibe ausgebildet ist, und dass die Außenfläche (18) der Scheibe (17) in der Verschlussposition des Ventilkörpers (11) sich zumindest annähernd in der Ebene der Außenfläche (5) des Kragens (8) befindet.

7. Entlüfterkopf nach einem der vorherigen Ansprüche, **dadurch gekennzeichnet, dass** die Außenfläche (18) der Scheibe (17) mindestens eine Ausnehmung (19) aufweist, die ein zum Zusammenwirken mit einem Verstellwerkzeug geeignetes Profil hat.

8. Entlüfterkopf nach Anspruch 7, **dadurch gekennzeichnet, dass** die Außenfläche (18) der Scheibe (17) einen oder mehrere, vorzugsweise zwei, in einem Winkel zueinander angeordnete Schlitz(e) oder Nut(en) (19) aufweist.

9. Entlüfterkopf nach einem der vorherigen Ansprüche, **dadurch gekennzeichnet, dass** die axiale Bohrung als Durchgangsbohrung (7) ausgeführt ist, die zumindest einen Teilbereich des Entlüftungskanals (4) bildet.

10. Entlüfterkopf nach einem der Ansprüche 1 bis 8, **dadurch gekennzeichnet, dass** die axiale Bohrung als stirnseitig geschlossene Sacklochbohrung (7a) ausgeführt ist, in die mindestens ein vorzugsweise radial verlaufender Kanal (4a) mündet, der zusammen mit der Sacklochbohrung (7a) den Entlüftungskanal (4) bildet.

11. Entlüfterkopf nach einem der vorherigen Ansprüche, **dadurch gekennzeichnet, dass** der Ventilkörper (11) einen Schaft (21) mit einem Außengewinde (22) zum Einschrauben in ein Innengewinde (12) der axialen Bohrung (7) aufweist, wobei zumindest in einem Teilbereich des Außengewindes (22) mindestens eine sich vorzugsweise axial erstreckende Nut (23) vorgesehen ist, deren Boden (24) einen radialen Abstand zum Kerndurchmesser des Innengewindes (12) der axialen Bohrung (7) hat.

12. Heizkörper (2), insbesondere Design-Heizkörper, **dadurch gekennzeichnet, dass** er einen Entlüfterkopf (1) nach einem der vorherigen Ansprüche aufweist.

13. Heizkörper (2) nach Anspruch 12, **dadurch gekennzeichnet, dass** er einen Abschlusskopf (25) aufweist, der in eine weitere Öffnung des Heizkörpers (2) abdichtend eingesetzt ist, wobei der Abschlusskopf (25) an seiner Außenstirnseite (5b) einen radial nach außen überstehenden Kragen (8b) aufweist, durch den der Randbereich der weiteren Öffnung des Heizkörpers (2) abgedeckt ist und der vorzugsweise den gleichen Durchmesser und/oder die gleiche Oberflächenstruktur aufweist wie der Kragen des Entlüfterkopfes (1).
